(19) Europäisches Patentamt
European Patent Office
Office européen des brevets

(11) **EP 2 039 102 B1**

(12) **FASCICULE DE BREVET EUROPEEN**

(45) Date de publication et mention
de la délivrance du brevet:
**14.03.2012 Bulletin 2012/11**

(21) Numéro de dépôt: **07823572.8**

(22) Date de dépôt: **12.07.2007**

(51) Int Cl.:
**H04L 27/26** *(2006.01)*     **H04L 25/02** *(2006.01)*

(86) Numéro de dépôt international:
**PCT/FR2007/051651**

(87) Numéro de publication internationale:
**WO 2008/007028 (17.01.2008 Gazette 2008/03)**

(54) **Procédés de réception et d'émission d'un signal multiporteuse comprenant un préambule comprenant des éléments de données, dispositifs et produits programme d'ordinateur correspondants**

Verfahren zum Senden und Empfangen eines Mehrträgersignals mit einer Datenelemente enthaltenden Präambel sowie entsprechende Geräte und Computerprogramme

Methods for receiving and transmitting a multicarrier signal comprising a preamble containing data elements, corresponding devices and computer program products

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.07.2006 FR 0606370**

(43) Date de publication de la demande:
**25.03.2009 Bulletin 2009/13**

(73) Titulaire: **FRANCE TELECOM**
**75015 Paris (FR)**

(72) Inventeurs:
• **LELE, Chrislin**
**F-35136 St Jacques (FR)**
• **JAVAUDIN, Jean-Philippe**
**F-35000 Rennes (FR)**
• **SKRZYPCZAK, Alexandre**
**F-35740 Pacé (FR)**

(74) Mandataire: **Bioret, Ludovic et al**
**Cabinet Vidon**
**16 B, rue de Jouanet - B.P. 90333**
**35703 Rennes Cedex 07 (FR)**

(56) Documents cités:
**EP-A2- 0 734 132     WO-A-02/25883**

**Description**

**1. Domaine de l'invention**

Le domaine de l'invention est celui de la transmission et de la diffusion d'informations numériques, notamment à haut débit, sur une bande de fréquence limitée.

Plus précisément, l'invention concerne une technique d'émission et de réception d'un signal à porteuses multiples permettant d'obtenir, en réception, une estimation du canal de transmission, par exemple en environnement radiomobile.

Notamment, la technique selon l'invention est bien adaptée à la transmission de signaux à porteuses multiples ayant subi une modulation de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquelles les porteuses sont mises en forme par une fonction prototype.

**2. Art antérieur**

**2.1 Les modulations multiporteuses**

*2.1.1 Les modulations OFDM*

On connaît à ce jour les modulations à porteuses multiples de type OFDM (en anglais « Orthogonally Frequency Division Multiplex »). Une telle technique de modulation apporte une solution efficace au problème de la diffusion d'informations, en particulier pour des canaux multi-trajets, filaires ou sans fil.

De ce fait, la technique de modulation multiporteuse OFDM a été retenue dans plusieurs normes et spécifications pour des applications en transmission filaires, par exemple de type ADSL (en anglais « Asymmetric Digital Subscriber Line ») ou PLC (en anglais « Powerline Communication », en français « courant porteur en ligne » ou CPL), ou sans fil, par exemple de type DAB (en anglais « Digital Audio Broadcasting »), DVB-T (en anglais « Digital Video Broadcasting - Terrestrial »), ou WLAN (en anglais « Wireless Local Area Network »).

Toutefois, la mise en forme rectangulaire d'un signal réalisée par un modulateur OFDM présente l'inconvénient d'une mauvaise localisation fréquentielle.

Par conséquent, des solutions alternatives ont été proposées, aboutissant à des systèmes de modulation à porteuses multiples dans lesquelles le signal est mis en forme par des fonctions dites prototypes, permettant d'obtenir une meilleure localisation fréquentielle.

En effet, l'ensemble des porteuses d'une modulation multiporteuse forme un multiplex, et chacune des porteuses de ce multiplex peut être mise en forme à l'aide d'une même fonction prototype, notée g(t), qui caractérise la modulation multiporteuse.

*2.1.2 Les modulations OFDM/OQAM*

Ainsi, une solution proposée consiste à remplacer une modulation en quadrature QAM (« Quadrature Amplitude Modulation »), mise en oeuvre sur chacune des porteuses, par une modulation décalant d'un demi temps symbole les parties réelles et imaginaires des symboles complexes à transmettre, pour deux fréquences porteuses successives.

Cette alternance conduit à une modulation multiporteuse de type OFDM/OQAM. Cette approche permet notamment de réaliser les conditions d'orthogonalité désirées avec des filtres prototypes qui ne sont pas nécessairement de forme rectangulaire.

En effet, le décalage (offset temporel) introduit par la modulation OQAM permet de relâcher les contraintes d'orthogonalité, ou plus généralement de biorthogonalité. Cette famille de modulation offre ainsi un choix de fonctions prototypes plus large que la simple fonction prototype rectangulaire d'une modulation OFDM.

Ainsi, suivant le type de canal de transmission considéré pour une application donnée, comme par exemple le canal radiomobile ou le canal à courant porteur en ligne (CPL), on peut effectuer un choix de fonctions prototypes appropriées aux types de distorsions rencontrées. En particulier, il est préférable de retenir des fonctions prototypes présentant une meilleure sélectivité fréquentielle que le sinus cardinal utilisé en modulation OFDM, notamment en canal radiomobile pour lutter contre la dispersion fréquentielle due à l'effet Doppler, ou en canal CPL pour mieux résister aux brouilleurs à bande étroite, et de manière générale pour satisfaire plus aisément les spécifications fréquentielles des masques d'émission.

La modulation OFDM/OQAM est donc une alternative à la modulation OFDM classique, reposant sur un choix judicieux de la fonction prototype modulant chacune des porteuses du signal, qui doit être bien localisée dans l'espace temps/fréquence.

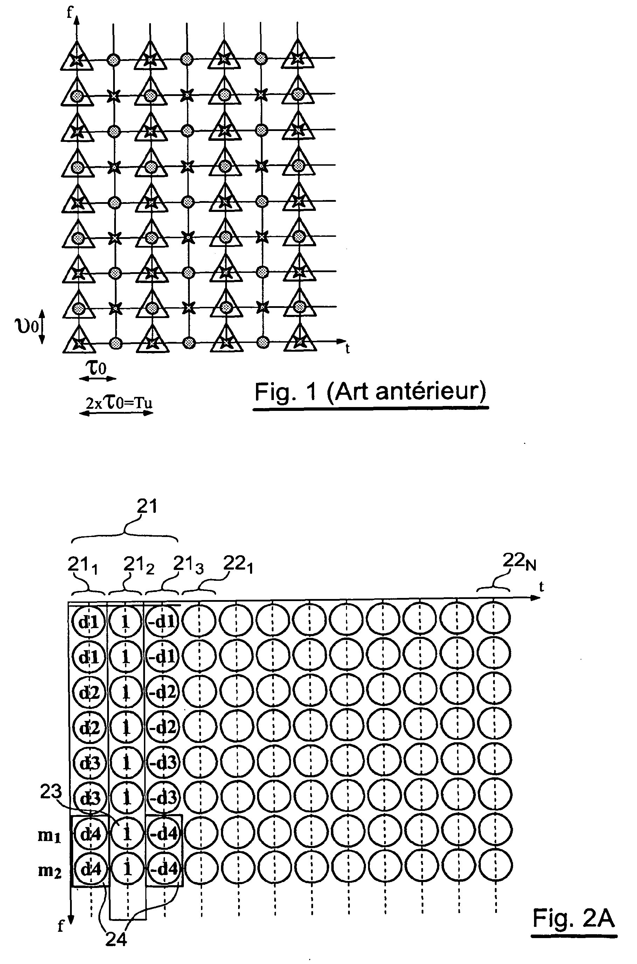

En particulier, la figure 1 illustre une représentation temps/fréquence des éléments de données à valeurs réelles transmis par modulation OFDM/OQAM et des éléments de données à valeurs complexes transmis par modulation OFDM classique, sans intervalle de garde, un symbole à valeurs complexes OFDM/QAM ou à valeurs réelles OFDM/OQAM étant constitué d'un ensemble d'éléments de données à un instant t donné. De plus, chaque emplacement temps/fréquence porte une fréquence porteuse, appelée sous-porteuse ou directement porteuse dans la suite de la description.

Sur cette figure 1, les triangles à un instant t donné représentent les éléments de données à valeurs complexes d'un symbole OFDM/QAM. Les ronds et les étoiles à un instant t donné représentent quant à eux les éléments de données à valeurs réelles d'un symbole OFDM/OQAM. Par exemple, pour deux symboles OFDM/OQAM successifs à valeurs réelles, les ronds correspondent à la partie réelle et les étoiles à la partie imaginaire d'un symbole complexe issu d'une constellation QAM que l'on souhaite transmettre en utilisant une modulation OFDM/OQAM.

En effet, pour une modulation OFDM classique de type complexe, les parties réelle et imaginaire d'un complexe issu de la constellation QAM sont transmises simultanément, tous les temps symbole $T_u$ ; dans le cadre d'une modulation OFDM/OQAM de type réel, en revanche, les parties réelle et imaginaire sont transmises avec un décalage temporel d'un demi temps symbole complexe ($T_u/2$).

On constate sur cette figure 1 que l'efficacité spectrale de l'OFDM/OQAM est identique à celle de l'OFDM classique sans intervalle de garde. En effet, en notant $\nu_0$ l'espacement entre deux porteuses adjacentes du multiplex, et $\tau_0$ l'espacement temporel entre deux symboles à valeurs réelles, on transmet pour un même espacement inter-porteuses $\nu_0$ :

- en OFDM/OQAM, une valeur réelle par porteuse tous les intervalles de temps $\tau_0$ ;
- en OFDM classique sans intervalle de garde, une valeur complexe (i.e. deux valeurs réelles) tous les $2 \times \tau_0 = T_u$.

Autrement dit, l'efficacité spectrale de l'OFDM/OQAM est $(T_g + 2\tau_0)/2\tau_0$ fois supérieure à celle de l'OFDM classique avec un intervalle de garde de durée $T_g$.

### 2.1.3 Les modulations BFDMIOQAM

De plus, si l'on choisit d'avoir côté réception des fonctions de démodulation qui ne sont pas nécessairement les fonctions conjuguées des fonctions prototypes utilisées en émission, on peut, en utilisant la propriété de biorthogonalité, généraliser l'OFDM/OQAM à la technique de modulation BFDM/OQAM.

Le principe d'offset, lié à la famille OQAM, est strictement identique dans le cadre d'une modulation de type BFDM/OQAM. Par conséquent, la figure 1 s'applique également aux modulations de type BFDM/OQAM.

Plus précisément, l'intérêt de la modulation de type BFDM/OQAM est de permettre, pour une longueur donnée de filtre prototype, une réduction du retard apporté par le système de transmission.

Comme indiqué précédemment, la technique de modulation BFDM/OQAM, tout comme l'OFDM/OQAM, transmet des symboles à valeur réelle à une cadence double de celle à laquelle l'OFDM transmet des symboles à valeur complexe. Par conséquent, ces deux modulations ont a priori la même efficacité spectrale.

Plus précisément, le signal BFDM/OQAM peut se représenter en bande de base sous la forme suivante :

$$s(t) = \sum_n \sum_{m=0}^{M-1} a_{m,n} \underbrace{g(t - n\tau_0) e^{j2\pi m\nu_0 t} e^{j\phi_{m,n}}}_{g_{m,n}(t)} \qquad (1),$$

avec :

- $a_{m,n}$ les éléments de données réels à transmettre sur une porteuse $m$ à l'instant $n$ ;
- $M$ le nombre de fréquences porteuses (nécessairement pair) ;
- $g$ la fonction prototype utilisée par le modulateur ;
- $\tau_0$ la durée d'un symbole BFDM/OQAM ;
- $\nu_0$ l'espacement inter porteuses ;
- $\phi_{m,n}$ un terme de phase choisi de manière à réaliser une alternance partie réelle-partie imaginaire permettant l'orthogonalité, ou plus généralement la biorthogonalité.

En effet, dans le cas biorthogonal, la base de démodulation à la réception peut être différente de celle de l'émission, et peut s'exprimer sous la forme suivante :

$$f_{m,n}(t) = f\left(t - n\tau_0\right)e^{j2\pi m v_0 t}e^{j\phi_{m,n}} \qquad (2)$$

La condition de biorthogonalité s'exprime alors sous la forme suivante :

$$\left\langle g_{m,n}, f_{m',n'}\right\rangle_R = \Re\left\{\int_{-\infty}^{\infty} g_{m,n}(t)f_{m',n'}^*(t)dt\right\} = \delta_{m,m'}\delta_{n,n'} \qquad (3)$$

où : $\langle.,.\rangle_R$ désigne le produit scalaire réel, et $\Re\{.\}$ désigne le partie réelle.

Cependant un inconvénient des techniques de modulation de type BFDM/OQAM (ou OFDMIOQAM), est que la condition de biorthogonalité (ou d'orthogonalité) n'est réalisée que pour les valeurs réelles de symboles à transmettre, ce qui pose un problème d'estimation en réception, et notamment d'estimation du canal de transmission, dans la mesure où les symboles reçus sont complexes.

### 2.2 Le canal de transmission

On décrit donc succinctement ci-après les caractéristiques d'un canal de transmission, notamment en environnement radiomobile, et les techniques d'estimation d'un tel canal. On rappelle en effet que le procédé de mise en forme d'un signal électrique à partir de l'information à transmettre dépend des conditions dans lesquelles un tel signal est transmis.

*2.2.1 Caractéristiques du canal de transmission*

En environnement radiomobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (en anglais « delay spread »), génère de l'interférence entre symboles (IES). On entend notamment par IES une interférence entre symboles temporels et/ou entre porteuses. Par exemple, dans un environnement de type urbain, l'étalement des retards est de l'ordre de ou inférieur à quelques microsecondes.

Le récepteur (par exemple un radiotéléphone mobile d'un automobiliste) étant supposé en mouvement, l'effet dit Doppler agit également sur chaque trajet, ce qui se traduit par un décalage en fréquence du spectre reçu, proportionnel à la vitesse de déplacement du mobile.

La conjugaison de ces effets se traduit par un canal non stationnaire présentant des évanouissements profonds à certaines fréquences. Un tel canal est notamment qualifié de canal sélectif en fréquence. Pour certaines applications, particulièrement intéressantes dans le cadre de la présente invention, la bande de transmission est de largeur supérieure à la bande de cohérence du canal (c'est-à-dire à la bande pour laquelle la réponse fréquentielle du canal peut être considérée comme constante, sur une durée donnée). Des évanouissements apparaissent donc dans la bande, c'est-à-dire qu'à un instant donné, certaines fréquences sont fortement atténuées.

Pour combattre ces différents phénomènes (dus à l'IES et à l'effet Doppler), on a envisagé dans les systèmes de type OFDM d'ajouter un intervalle de garde, pendant lequel on ne transmet pas d'informations utiles, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps/fréquence.

L'introduction d'un tel intervalle de garde permet ainsi de réduire les phénomènes liés à l'interférence entre symboles.

Toutefois, un inconvénient majeur de cette technique est qu'elle est d'efficacité spectrale réduite, aucune information utile n'étant transmise pendant la durée de l'intervalle de garde.

En revanche, les techniques de modulation de type OFDM/OQAM et BFDM/OQAM, ne nécessitent pas l'introduction d'un intervalle de garde ou d'un préfixe cyclique, tout en présentant la même efficacité spectrale qu'une modulation OFDM classique.

*2.2.2 Estimation du canal de transmission*

Les caractéristiques distinctes des modulations multiporteuses de type réel d'une part, et de type complexe d'autre part, induisent des traitements différents lors de la mise en oeuvre d'une estimation du canal de transmission.

Dans le contexte de l'OFDM/QAM, on a notamment envisagé une méthode reposant sur la mise en oeuvre d'une estimation par symboles de référence. Selon cette technique, au moins un symbole de référence est placé en début de trame, une trame étant constituée d'un ensemble d'au moins un symbole de référence, appelé préambule, et d'un ensemble de symboles utiles. Grâce à ce(s) symbole(s), le canal est estimé sur chacune des porteuses du multiplex. Le choix des paramètres du système (durée symbole, longueur de trame, etc...) assure que le canal varie lentement par rapport au temps symbole. On le suppose alors quasi-constant sur une trame. On peut donc utiliser l'estimée du canal sur le(s) symbole(s) de référence pour l'ensemble des symboles OFDM de la trame.

On détaille ci-après une technique d'estimation du canal de transmission pour des modulations de type réel, par exemple OFDM/OQAM ou BFDM/OQAM. En effet, dans le cas d'une modulation multiporteuse de type réel, le fait de disposer d'une orthogonalité des translatées au sens réel rend le processus d'estimation de canal plus délicat.

En effet, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéel, de l'interférence (intrinsèque) entre porteuses est générée.

En effet, la partie imaginaire de la projection du signal reçu sur la base des translatées de la fonction prototype n'est pas nulle. Il apparaît alors un terme perturbateur qui vient s'ajouter au signal démodulé, et qu'il faut corriger avant de faire l'estimation du canal. Il est donc nécessaire de concevoir des méthodes permettant de compenser cette perte d'orthogonalité complexe, et palliant ainsi au moins certains inconvénients de cette technique de l'art antérieur pour les modulations de type OFDM/OQAM ou BFDM/OQAM.

Considérons par exemple y(t) le signal reçu.

On suppose notamment que le choix des paramètres de la modulation multiporteuse assure que le canal peut être considéré comme plat sur chacune des sous-porteuses pour chaque symbole OFDM/OQAM. Le canal est alors modélisable par un coefficient complexe par sous-porteuse, noté $H_{m,n}$, où $m$ est l'indice de la sous-porteuse et $n$ celui du symbole OFDM/OQAM.

On utilise alors la projection complexe du signal multiporteuse au point $(m_0,n_0)$ de l'espace temps/fréquence pour estimer le canal de transmission $\hat{H}_{m0,n0}$ à cet emplacement.

Ainsi, si on émet $a_{m_0,n_0} = \sqrt{E}$ à cet emplacement, on a :

$$\hat{H}_{m_0,n_0} = \frac{\int y(t) g^*_{m_0,n_0}(t)dt}{\sqrt{E}} \qquad (4)$$

En supposant que le canal est idéal ($y(t)=s(t)$), étant donné que les modulations OFDMIOQAM et BFDM/OQAM ont seulement une orthogonalité réelle (équation (3)), on ne peut pas avoir $\hat{H}_{m0,n0} = 1$.

Donc considérant $a^{(c)}_{m_0,n_0} = \left\langle s, g_{m_0,n_0} \right\rangle_C = \int s(t) g^*_{m_0,n_0}(t)dt$, et supposant que le canal est idéal, on a :

$$a^{(c)}_{m_0,n_0} = \sqrt{E} + \underbrace{\sum_{(m,n)\neq(m_0,n_0)} a_{m,n}\int g_{m,n}(t) g^*_{m_0,n_0}(t)dt}_{I_{m_0,n_0} \in j\Re} \qquad (5)$$

où $\langle .,.\rangle c$ désigne le produit scalaire en complexe.

L'équation (5) traduit le fait que la projection complexe du signal parfaitement transmis est néanmoins entachée d'une interférence entre symboles (IES) intrinsèque aux modulations OFDM/OQAM ou BFDM/OQAM, notée $I_{m0,n0}$.

En particulier, l'existence de cette interférence entre symboles perturbe fortement l'estimation du canal de transmission, et, par conséquent, l'estimation des symboles.

Une solution à ce problème a notamment été proposée dans le document de brevet WO 02/25883 publié le 28 mars 2002, dans le cadre d'une estimation de canal par symboles de référence, pour un signal à porteuses multiples comprenant au moins une trame.

Plus précisément, la technique proposée dans ce document permet de limiter cette interférence en utilisant une mise en trame spécifique des données à l'émission, reposant sur l'insertion d'un préambule. On réduit ainsi l'interférence intrinsèque affectant les symboles de référence des trames du signal multiporteuse en imposant une contrainte sur la valeur de l'un au moins des éléments de données des symboles de référence.

Ainsi, cette technique associe à des zones $3 \times 3$ du réseau temps/fréquence, dite première couronne, ou zones de taille supérieure, un élément de donnée de référence, appelé pilote, ainsi qu'une donnée de contrôle.

Cependant, un inconvénient de cette technique reposant sur l'insertion d'un préambule est la perte d'efficacité spectrale liée à l'émission du préambule, ce dernier étant classiquement formé d'au moins trois symboles de référence, durant lesquelles aucune information utile n'est transmise.

Un autre inconvénient de cette technique de l'art antérieur est que les séquences utilisées pour réduire l'interférence intrinsèque présentent un caractère périodique, ce qui entraîne une très forte variation de la dynamique du signal multiporteuse, et par exemple du facteur de crête ou PAPR (en anglais « Power Average Peak Ratio ») sur les préambules.

De plus, cette technique est limitée à certains types de filtres prototypes et/ou types de modulations.

Un autre inconvénient de cette technique de l'art antérieur est de nécessiter un calcul matriciel à l'émission et à la réception, avec une taille de matrice augmentant avec la taille de la couronne.

Il existe donc un besoin pour une technique permettant d'obtenir une meilleure estimation du canal de transmission, et conduisant à une estimation plus précise des éléments de données informatifs portés par le signal multiporteuse.

## 3. Exposé de l'invention

L'invention propose une solution nouvelle qui ne présente pas l'ensemble de ces inconvénients de l'art antérieur, sous la forme d'un procédé de réception d'un signal reçu correspondant à un signal multiporteuse émis par au moins un émetteur via un canal de transmission, ledit signal multiporteuse étant formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse.

Selon l'invention, au moins un préambule formé d'au moins trois symboles consécutifs et destiné à permettre une estimation dudit canal de transmission étant inséré dans ledit signal multiporteuse, lesdits symboles de préambule comprenant au moins deux symboles d'extrémité encadrant au moins un symbole central composé de pilotes, dits pilotes centraux, tel que lesdits symboles d'extrémité portent, au moins sur certaines de leurs porteuses voisines d'un pilote central, des éléments de données organisés en au moins un groupe d'éléments, les éléments de données d'au moins un groupe d'éléments étant des éléments de données informatifs, ledit procédé de réception comprend, pour au moins un pilote central :

- une étape d'annulation ou de réduction d'une interférence affectant ledit pilote central, tenant compte d'une relation de proportionnalité liant les valeurs réelles portées par chaque élément dudit groupe d'éléments ;
- une étape d'estimation dudit canal de transmission, tenant compte du résultat de ladite étape d'annulation ou de réduction.

Ainsi, l'invention repose sur une approche nouvelle et inventive de l'estimation du canal de transmission, dans un système de transmission mettant en oeuvre un signal multiporteuse portant des éléments de données à valeurs réelles et comprenant un préambule qui peut être constitué non seulement d'éléments de données de référence uniquement, mais également d'éléments de données informatifs. En particulier, un tel signal multiporteuse est du type OFDM/OQAM ou BFDM/OQAM.

On rappelle que le canal de transmission est découpé en cellules selon les axes temporel et fréquentiel. À chaque cellule ou emplacement de l'espace temps/fréquence est attribuée une porteuse dédiée. On répartit donc l'information à transporter sur l'ensemble de ces porteuses.

Plus précisément, la technique selon l'invention repose sur l'annulation ou la réduction, en réception, d'une interférence affectant un pilote central, en tenant compte d'une relation de proportionnalité liant les valeurs réelles portées par chaque élément d'un groupe d'éléments, un tel groupe d'éléments étant constitué des éléments de données portés par certaines des porteuses voisines du pilote central, sur les symboles d'extrémité.

Notamment, les symboles d'extrémité, et par conséquent les groupes d'éléments, portent des éléments de données informatifs et/ou des éléments de données de référence.

On annule ainsi, ou, à tout le moins, on réduit, à partir de la relation de proportionnalité liant les valeurs réelles en émission des éléments de données voisins d'un pilote central, une interférence imaginaire affectant ce pilote central. En réception, on utilise ensuite le résultat de l'annulation ou de la réduction de ce terme d'interférence imaginaire pour déterminer une estimation du canal de transmission entre un émetteur et un récepteur dudit signal multiporteuse.

En particulier, contrairement aux techniques de l'art antérieur selon lesquelles le préambule est formé d'au moins trois symboles de référence, la technique selon l'invention permet d'introduire des éléments de données informatifs dans le préambule, et donc d'augmenter le nombre de symboles utiles.

On peut également noter que cette technique s'applique à différents types de fonctions prototypes, qui ne sont pas nécessairement isotropiques.

Selon une variante de réalisation de l'invention, ledit canal de transmission étant sensiblement constant sur au moins deux fréquences consécutives délimitant une région d'intérêt, l'étape d'annulation ou de réduction de l'interférence imaginaire affectant lesdits pilotes centraux met en oeuvre une combinaison linéaire en fréquence de ces pilotes centraux localisés dans ladite région d'intérêt.

Ainsi, considérant un canal modélisable par un coefficient complexe par sous-porteuse $H_{m,n}$, où $m$ est l'indice de la sous-porteuse et $n$ celui d'un symbole central, et sensiblement invariant en fréquence aux emplacements $(m,n)$ et $(m + 1, n)$, alors on a :

$$H_{m,n}^{(c)} \approx H_{m+1,n}^{(c)}$$

Par conséquent, la combinaison linéaire en fréquence mise en oeuvre pour annuler, ou à tout le moins réduire, l'interférence affectant un pilote central du symbole central n peut s'exprimer sous la forme suivante :

$$t_1 y_{m,n}^{(c)} + t_2 y_{m+1,n}^{(c)} = H_{m,n}^{(c)} \left( t_1 a_{m,n}^{(r)} + t_2 a_{m+1,n}^{(r)} + j \left( t_1 a_{m,n}^{(i)} + t_2 a_{m+1,n}^{(i)} \right) \right),$$

avec :

-    $y_{m,n}^{(c)}$ le signal reçu (complexe) à l'emplacement $(m,n)$ ;

-    $y_{m+1,n}^{(c)}$ le signal reçu (complexe) à l'emplacement $(m + 1, n)$ ;

-    $H_{m,n}^{(c)}$ le coefficient complexe représentatif du canal de transmission à l'emplacement $(m,n)$, tel que $H_{m,n}^{(c)} \approx H_{m+1,n}^{(c)}$ ;

-    $a_{m,n}^{(r)}$ et $a_{m,n}^{(i)}$ des valeurs réelles égales respectivement à la partie réelle et à la partie imaginaire de la valeur d'un pilote central à l'emplacement $(m,n)$ ;

-    $a_{m+1,n}^{(r)}$ et $a_{m+1,n}^{(i)}$ des valeurs réelles égales respectivement à la partie réelle et à la partie imaginaire de la valeur d'un pilote central à l'emplacement $(m + 1,n)$ ;

-    $t_1$ et $t_2$ des coefficients tels que $t_1 a_{m,n}^{(i)} + t_2 a_{m+1,n}^{(i)} = 0$.

Selon une autre variante de réalisation de l'invention, ledit canal de transmission étant sensiblement constant sur au moins deux instants consécutifs formant une région d'intérêt, et ledit préambule comprenant au moins deux symboles centraux, ladite étape d'annulation ou de réduction de l'interférence imaginaire affectant lesdits pilotes centraux met en oeuvre une combinaison linéaire en temps desdits pilotes centraux localisés dans ladite région d'intérêt.

Ainsi, on considère un canal modélisable par un coefficient complexe par sous-porteuse $H_{m,n}$, où $m$ est l'indice de la sous-porteuse et $n$ celui d'un symbole central, et sensiblement invariant en temps aux emplacements $(m,n)$ et $(m,$

$n + 1$). On a donc $H_{m,n}^{(c)} \approx H_{m,n+1}^{(c)}$.

Plus précisément, on considère un préambule comprenant par exemple quatre symboles, dont deux symboles centraux aux indices temporels $n$ et $n+1$.

Par conséquent, la combinaison linéaire en temps mise en oeuvre pour annuler, ou à tout le moins réduire, l'interférence affectant un pilote central du symbole central $n$ ou du symbole central $n+1$ peut s'exprimer sous la forme suivante :

$$t_1 y_{m,n}^{(c)} + t_2 y_{m,n+1}^{(c)} = H_{m,n}^{(c)}\left(t_1 a_{m,n}^{(r)} + t_2 a_{m,n+1}^{(r)} + j\left(t_1 a_{m,n}^{(i)} + t_2 a_{m,n+1}^{(i)}\right)\right)$$

avec :

- $y_{m,n}^{(c)}$ le signal reçu (complexe) à l'emplacement $(m,n)$ ;

- $y_{m,n+1}^{(c)}$ le signal reçu (complexe) à l'emplacement $(m,n + 1)$ ;

- $H_{m,n}^{(c)}$ le coefficient complexe représentatif du canal de transmission à l'emplacement $(m,n)$, tel que $H_{m,n}^{(c)} \approx H_{m,n+1}^{(c)}$ ;

- $a_{m,n}^{(r)}$ et $a_{m,n}^{(i)}$ des valeurs réelles égales respectivement à la partie réelle et à la partie imaginaire de la valeur d'un pilote central à l'emplacement $(m,n)$ ;

- $a_{m,n+1}^{(r)}$ et $a_{m,n+1}^{(i)}$ des valeurs réelles égales respectivement à la partie réelle et à la partie imaginaire de la valeur d'un pilote central à l'emplacement $(m,n + 1)$ ;

- $t_1$ et $t_2$ des coefficients tels que $t_1 a_{m,n}^{(i)} + t_2 a_{m,n+1}^{(i)} = 0$.

Un autre mode de réalisation de l'invention concerne un dispositif de réception d'un signal reçu correspondant à un signal multiporteuse, tel que décrit précédemment, émis par au moins un émetteur via un canal de transmission.

Selon l'invention, au moins un préambule formé d'au moins trois symboles consécutifs et destiné à permettre une estimation dudit canal de transmission étant inséré dans ledit signal multiporteuse, lesdits symboles de préambule comprenant au moins deux symboles d'extrémité encadrant au moins un symbole central composé de pilotes, dits pilotes centraux, tel que lesdits symboles d'extrémité portent, au moins sur certaines de leurs porteuses voisines d'un pilote central, des éléments de données organisés en au moins un groupe d'éléments, les éléments de données d'au moins un groupe d'éléments étant des éléments de données informatifs, ledit dispositif de réception comprend, pour au moins un pilote central :

- des moyens d'annulation ou de réduction d'une interférence affectant ledit pilote central, tenant compte d'une relation de proportionnalité liant les valeurs réelles portées par chaque élément dudit groupe d'éléments ;
- des moyens d'estimation dudit canal de transmission, tenant compte du résultat de ladite étape d'annulation ou de réduction.

Un tel dispositif de réception est notamment adapté à mettre en oeuvre le procédé de réception tel que décrit précédemment.

Par exemple, un tel dispositif de réception correspond ou est compris dans un terminal (radiotéléphone, ordinateur portable, PDA ...) ou dans une station de base.

Un autre aspect de l'invention concerne produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception décrit précédemment.

Un autre aspect de l'invention concerne un procédé d'émission d'un signal multiporteuse, destiné à être transmis via un canal de transmission, formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse.

Selon l'invention, un tel procédé d'émission insère dans ledit signal multiporteuse au moins un préambule formé d'au moins trois symboles consécutifs, lesdits symboles de préambule comprenant au moins deux symboles d'extrémité encadrant au moins un symbole central composé de pilotes, dits pilotes centraux, tel que lesdits symboles d'extrémité portent, au moins sur certaines de leurs porteuses voisines d'un pilote central, des éléments de données organisés en au moins un groupe d'éléments, les valeurs entre chaque élément d'un groupe d'éléments étant liées par une relation de proportionnalité permettant d'annuler ou de réduire, en réception, une interférence affectant ledit pilote central, les éléments de données d'au moins un groupe d'éléments étant des éléments de données informatifs. Un tel préambule permet ainsi de déterminer une estimation d'un canal de transmission entre un émetteur destiné à émettre ledit signal multiporteuse et ledit récepteur.

Ainsi, contrairement aux techniques de l'art antérieur selon lesquelles un préambule est intégralement formé d'éléments de données de référence, la technique selon l'invention propose d'insérer des éléments de données informatifs dans le préambule, sur les symboles d'extrémité. On évite ainsi une perte d'efficacité spectrale en introduisant des données dans le préambule.

Par exemple, lesdits groupes d'éléments comprennent chacun quatre éléments de données, chaque élément de données d'un même groupe d'éléments portant une valeur identique, en valeur absolue.

Selon un aspect particulier de l'invention, les pilotes centraux du ou desdits symboles centraux portent une valeur identique.

Selon une variante de réalisation, lesdits éléments de données d'au moins un groupe d'éléments sont des pilotes, ce qui permet d'obtenir une meilleure estimation du canal de transmission.

Un autre mode de réalisation de l'invention concerne également un dispositif d'émission d'un signal multiporteuse tel que décrit précédemment.

Selon l'invention, un tel dispositif d'émission comprend des moyens d'insertion dans ledit signal multiporteuse d'au moins un préambule formé d'au moins trois symboles consécutifs, lesdits symboles de préambule comprenant au moins deux symboles d'extrémité encadrant au moins un symbole central composé de pilotes, dits pilotes centraux, tel que lesdits symboles d'extrémité portent, au moins sur certaines de leurs porteuses voisines d'un pilote central, des éléments de données organisés en au moins un groupe d'éléments, les valeurs entre chaque élément d'un groupe d'éléments étant liées par une relation de proportionnalité permettant d'annuler ou de réduire, en réception, une interférence affectant ledit pilote central, les éléments de données d'au moins un groupe d'éléments étant des éléments de données informatifs, de façon que ledit préambule permette de déterminer une estimation dudit canal de transmission.

Un tel dispositif d'émission est notamment adapté à mettre en oeuvre le procédé d'émission tel que décrit précédemment.

En particulier, il est adapté à émettre un tel signal multiporteuse à destination du dispositif de réception décrit ci-dessus.

Par exemple, un tel dispositif d'émission correspond ou est compris dans un terminal (radiotéléphone, ordinateur portable, PDA ...) ou dans une station de base.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci-dessus.

Un autre aspect de l'invention concerne un signal multiporteuse formé d'une succession temporelle de symboles constitués d'un ensemble d'éléments de données à valeurs réelles comprenant des éléments de données informatifs, et pour au moins certains desdits symboles, des éléments de données de référence appelés pilotes dont la valeur et l'emplacement à l'émission sont connus d'au moins un récepteur destiné à effectuer une réception dudit signal multiporteuse, chacun desdits éléments de données modulant une fréquence porteuse dudit signal, une fréquence porteuse modulée par un desdits éléments de données étant appelée porteuse.

Selon l'invention, un tel signal comprend au moins un préambule formé d'au moins trois symboles consécutifs, lesdits symboles de préambule comprenant au moins deux symboles d'extrémité encadrant au moins un symbole central composé de pilotes, dits pilotes centraux, tel que lesdits symboles d'extrémité portent, au moins sur certaines de leurs porteuses voisines d'un pilote central, des éléments de données organisés en au moins un groupe d'éléments, les valeurs entre chaque élément d'un groupe d'éléments étant liées par une relation de proportionnalité permettant d'annuler ou de réduire, en réception, une interférence affectant ledit pilote central, les éléments de données d'au moins un groupe d'éléments étant des éléments de données informatifs. Le préambule permet ainsi de déterminer une estimation d'un canal de transmission entre un émetteur destiné à émettre ledit signal multiporteuse et ledit récepteur.

Un tel signal peut notamment être émis selon le procédé d'émission décrit ci-dessus et/ou reçu selon le procédé de réception décrit précédemment. Ce signal pourra bien sûr comporter les différentes caractéristiques relatives au procédé d'émission selon l'invention.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, est une représentation temps/fréquence des symboles à valeurs complexes transmis selon une modulation OFDM classique et des symboles à valeurs réelles transmis selon une modulation OFDM/OQAM de l'art antérieur ;
- les figures 2A et 2B illustrent des exemples de structure d'un signal à porteuses multiples selon deux variantes de réalisation de l'invention ;
- la figure 3 présente les principales étapes du procédé de réception selon un mode de réalisation de l'invention ;
- les figures 4A et 4B présentent respectivement la structure d'un dispositif d'émission et d'un dispositif de réception, selon un mode de réalisation particulier de l'invention.

### 5. Description d'un mode de réalisation de l'invention

Le principe général de l'invention repose sur la mise en oeuvre, dans un signal à porteuses multiples, d'au moins un préambule formé de symboles dits de préambule, dont au moins un symbole comprenant des éléments de données de référence (encore appelés pilotes), connus d'un récepteur destiné à effectuer une réception de ce signal multiporteuse.

Plus précisément, selon un mode de réalisation particulier, un préambule est formé d'au moins trois symboles de référence, dont au moins un symbole central, formé de pilotes dits centraux, et deux symboles d'extrémité, portant, au moins sur certaines porteuses voisines d'un pilote central, des éléments de données organisés en un groupe d'éléments. Autrement dit, un tel préambule a une durée d'au moins $3\tau_0$, avec $\tau_0$ la durée d'un symbole.

En particulier, un tel groupe d'éléments entourant un pilote central comprend des éléments de données dont les valeurs réelles sont liées par une relation de proportionnalité, connue du récepteur.

Cette relation de proportionnalité est ainsi prise en compte lors de l'annulation, ou de la réduction, d'une interférence imaginaire affectant ledit pilote central, en réception.

En réception, on utilise ensuite le résultat de l'annulation ou de la réduction d'une interférence imaginaire affectant ledit pilote central pour déterminer une estimation du canal de transmission entre un émetteur et un récepteur dudit signal multiporteuse.

On décrit ci-après un mode de réalisation particulier de l'invention, mis en oeuvre dans le cadre d'une modulation multiporteuse de type OFDM/OQAM ou BFDM/OQAM.

Côté émission, on insère dans le signal multiporteuse au moins un préambule formé d'au moins trois symboles consécutifs, comprenant au moins deux symboles d'extrémité encadrant au moins un symbole central.

Comme indiqué précédemment, les éléments d'un groupe d'éléments encadrant un pilote central portent des valeurs liées par une relation de proportionnalité, connue du récepteur.

En particulier, un tel préambule, qui permet de déterminer une estimation du canal de transmission sur toutes les fréquences, le canal étant supposé constant en temps, peut notamment être inséré de manière périodique.

On présente ci-après, en relation avec la figure 2A, un premier exemple de réalisation de l'invention, dans lequel un tel préambule permet de réduire ou d'annuler l'interférence imaginaire affectant un pilote central, après la mise en oeuvre, en réception, d'une combinaison linéaire des signaux adjacents en fréquence.

Plus précisément, la figure 2A illustre un signal multiporteuse formé d'une succession temporelle de symboles constitués d'un ensemble d'éléments de données à valeurs réelles, comprenant :

- des éléments de données informatifs ; et
- pour au moins certains desdits symboles, des éléments de données de référence appelés pilotes, dont la valeur et l'emplacement à l'émission sont connus d'au moins un récepteur destiné à effectuer une réception du signal multiporteuse.

Un tel signal multiporteuse comprend un préambule 21 et un ensemble de symboles utiles $22_1$ à $22_N$.

Par exemple, le préambule 21 comprend trois symboles $21_1$, $21_2$ et $21_3$, encore appelés symboles de préambule, dont un premier symbole d'extrémité $21_1$, un symbole central $21_2$ et un deuxième symbole d'extrémité $21_3$, le symbole central $21_2$ portant des éléments de données de référence notés pilotes centraux.

Sur la figure 2A, un pilote central 23 est encadré par un groupe d'éléments 24, dont les valeurs réelles portées en émission sont liées par une relation de proportionnalité.

Par exemple, le groupe d'éléments 24 comprend les éléments de données informatifs d4, d4, -d4 et -d4. Plus précisément, par exemple pour le symbole d'extrémité $21_1$, les éléments de données sur deux fréquences consécutives $m_1$ et $m_2$ du groupe 24 sont égaux, et portent la donnée d4, et pour le symbole d'extrémité $21_3$, les éléments de données sur deux fréquences consécutives $m_1$ et $m_2$ du groupe 24 sont égaux, et portent la donnée -d4.

Autrement dit, pour une même fréquence $m_1$ ou $m_2$, les éléments de données du groupe 24 sur les deux symboles d'extrémité encadrant le pilote central 23, sont d4 et -d4.

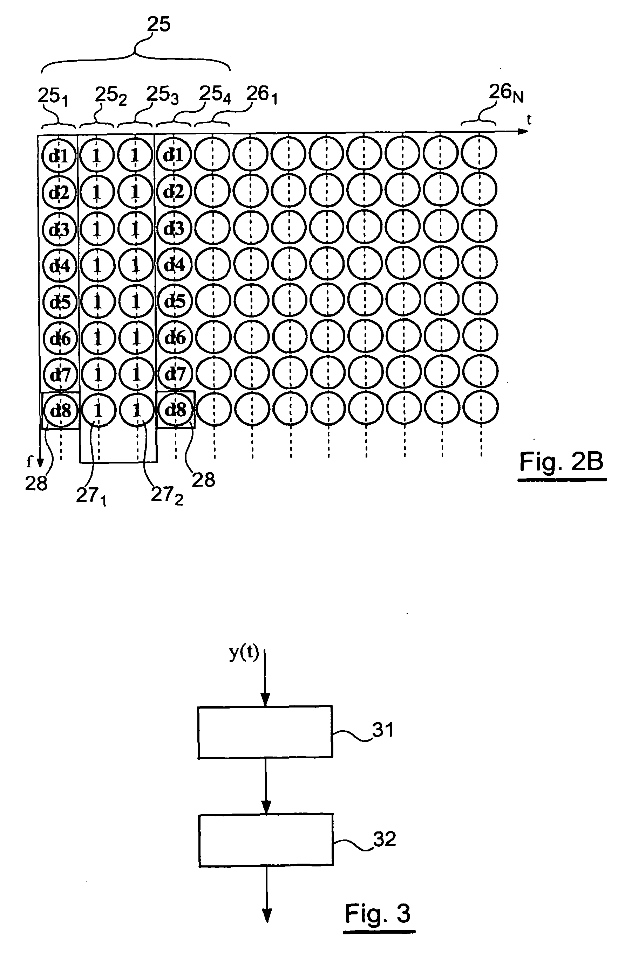

On présente ci-après, en relation avec la figure 2B, un deuxième exemple de réalisation de l'invention, dans lequel un tel préambule permet de réduire ou d'annuler l'interférence imaginaire affectant un pilote central, après la mise en oeuvre, en réception, d'une combinaison linéaire des signaux adjacents en temps.

Plus précisément, la figure 2B illustre un signal multiporteuse formé d'une succession temporelle de symboles constitués d'un ensemble d'éléments de données à valeurs réelles.

Un tel signal multiporteuse comprend un préambule 25 et un ensemble de symboles utiles $26_1$ à $26_N$.

Par exemple, le préambule 25 comprend quatre symboles $25_1$, $25_2$, $25_3$ et $25_4$ encore appelés symboles de préambule, dont un premier symbole d'extrémité $25_1$, deux symboles centraux $25_2$ et $25_3$ et un deuxième symbole d'extrémité $25_4$, les symboles centraux $25_2$ et $25_3$ portant des pilotes centraux.

Sur la figure 2B, des pilotes centraux $27_1$ et $27_2$ sont encadrés par un groupe d'éléments 28, dont les valeurs réelles portées en émission sont liées par une relation de proportionnalité.

Par exemple, les éléments de données du groupe 28 d'une même fréquence sont égaux, et portent une donnée égale à d8, pour les deux symboles d'extrémité $25_1$ et $25_4$ encadrant les deux pilotes centraux $27_1$ et $27_2$.

Côté réception, comme illustré en relation avec la figure 3, une étape 31 permet d'annuler ou de réduire l'interférence imaginaire affectant un pilote central en mettant en oeuvre une combinaison linéaire adéquate entre au moins deux fréquences et/ou deux temps consécutifs.

Dans le cas où le canal est considéré comme sensiblement constant en fréquence, le préambule mis en oeuvre en émission est par exemple celui illustré en figure 2A.

Ainsi, la combinaison linéaire effectuée en réception lors de l'étape 31 est appliquée pour deux fréquences consécutives, par exemple $m_1$ et $m_2$, avec $m_1 = m$ et $m_2 = m+1$.

Par exemple, si le pilote central 23 est localisé à l'emplacement temps/fréquence $(m,n)$ et porte une valeur réelle $a_{m,n}$ en émission, notée $a_{m,n}^{(r)}$, alors le signal reçu $y_{m,n}$ en réception à l'emplacement $(m,n)$ porte une valeur complexe, notée $y_{m,n}^{(c)}$. De même pour le pilote central localisé à l'emplacement temps/fréquence $(m+1,n)$ et portant une valeur réelle $a_{m+1,n}$ en émission, notée $a_{m+1,n}^{(r)}$, le signal reçu $y_{m+1,n}$ en réception à l'emplacement $(m+1,n)$ porte une valeur complexe, notée $y_{m+1,n}^{(c)}$.

La combinaison linéaire dans cet exemple est appliquée à $y_{m,n}^{(c)}$ et $y_{m+1,n}^{(c)}$ de façon à annuler, ou à tout le moins réduire, l'interférence imaginaire affectant le pilote 23 localisé à l'emplacement temps/fréquence $(m,n)$ et/ou le pilote localisé à l'emplacement temps/fréquence $(m+1,n)$.

L'estimation du canal est ensuite obtenue lors d'une étape 32 par division avec la même combinaison linéaire des signaux reçus aux emplacements temps/fréquence $(m,n)$ et $(m+1,n)$.

Ces différentes étapes sont mises en oeuvre pour tous les pilotes centraux du symbole central $21_2$, à l'exception des pilotes centraux portés par les fréquences bornant le signal multiporteuse, les valeurs des éléments de données portés par les fréquences en bordure de spectre étant classiquement mises à zéro.

On décrit ci-après deux exemples de mise en oeuvre de la technique de réception selon ce mode de réalisation particulier de l'invention, dans le cadre d'une modulation de type BFDM/OQAM.

Plus précisément, le signal reçu $y(t)$ peut s'écrire sous la forme :

$$y(t) = \sum_{n} \sum_{m=0}^{M-1} H_{m,n}^{(c)} a_{m,n} g_{m,n}(t) + b(t) \qquad (6),$$

avec $H_{m,n}^{(c)}$ les coefficients représentatifs du canal de transmission à chaque emplacement temps/fréquence, avec $m$ l'indice fréquentiel et $n$ l'indice temporel, et $b(t)$ la composante de bruit.

Comme déjà précisé pour les modulations de type OFDM/OQAM, le signal émis et le canal de transmission étant modélisés en bande de base par des nombres complexes, la valeur $a_{m_0,n_0}^{(c)}$ à estimer en réception pour chaque emplacement $(m_0,n_0)$ du réseau temps/fréquence est également un nombre complexe.

En supposant également que le canal est approximativement constant sur une région donnée de l'espace temps/fréquence, du fait de la biorthogonalité de la paire de fonctions $(f,g)$ décrite en relation avec l'équation (3), le signal reçu sur la porteuse $m_0$ à l'instant $n_0$ est estimé par :

$$y_{m_0,n_0}^{(c)} = \left\langle s, f_{m_0,n_0} \right\rangle_C$$

$$y_{m_0,n_0}^{(c)} = H_{m_0,n_0}^{(c)} a_{m_0,n_0} + H_{m_0,n_0}^{(c)} \underbrace{\left[ \sum_{(m,n) \neq (m_0,n_0)} a_{m,n} \int g_{m,n}(t) f_{m_0,n_0}^{*}(t) dt \right]}_{C_{m_0,n_0}} + D_{m_0,n_0} + b_{m_0,n_0}$$

$$(7)$$

Dans cette expression, le terme $C_{m0,n0}$ est lié à l'interférence créée dans la région où le canal de transmission est supposé constant, et le terme $D_{m0,n0}$ est associé à l'interférence créée dans les régions où le canal de transmission n'est plus supposé constant.

Dans la suite de la description, on omet la composante de bruit $b$, et on néglige le terme $D_{m0,n0}$ de façon à simplifier les équations.

Ainsi, dans le premier exemple, on considère le canal comme étant sensiblement invariant en fréquence aux emplacements $(m,n)$ et $(m+1,n)$, et modélisable par un coefficient complexe par sous-porteuse $H_{m,n}$, où $m$ est l'indice de la sous-porteuse et $n$ celui d'un symbole central, et alors on a :

$$H_{m,n}^{(c)} \approx H_{m+1,n}^{(c)}$$

Le signal reçu, en tout emplacement $(m,n)$ du réseau temps/fréquence, peut s'interpréter comme le résultat du produit d'un canal complexe par une valeur complexe, c'est-à-dire : $y_{m,n}^{(c)} = H_{m,n}^{(c)} a_{m,n}^{(c)} = H_{m,n}^{(c)} \left( a_{m,n}^{(r)} + j a_{m,n}^{(i)} \right)$, où $a_{m,n}^{(r)}$ et $a_{m,n}^{(i)}$ sont des valeurs réelles (l'exposant (r) indiquant la partie réelle d'une valeur complexe, et l'exposant (i) la partie imaginaire).

De même, on peut écrire, pour le signal reçu, en tout emplacement $(m+1,n)$ du réseau temps/fréquence :

$$y_{m+1,n}^{(c)} = H_{m+1,n}^{(c)} \left( a_{m+1,n}^{(r)} + j a_{m+1,n}^{(i)} \right) \approx H_{m,n}^{(c)} \left( a_{m+1,n}^{(r)} + j a_{m+1,n}^{(i)} \right)$$

De plus, considérant un pilote central à l'emplacement $(m,n)$, on définit un domaine dans le préambule autour de ce pilote central, noté $\Omega_{P,Q}$, tel que :

$$\Omega_{P,Q} = \left\{ (p,q), p = -P,\dots,P, q = -Q,\dots,Q \right\} - \left\{ (0,0) \right\},$$

où l'emplacement de coordonnées (0,0) correspond à l'emplacement $(m,n)$.

On fait ensuite l'hypothèse que :

$$a_{m,n}^{(i)} \approx \sum_{p,q \in \Omega_{P,Q}} \Im\left\{\beta_{m_0+p,n_0+q}^{(m_0,n_0)}\right\} a_{m_0+p,n_0+q}^{(r)} \qquad (8)$$

où $\beta_{p,q}$ est une expression dont les valeurs réelles dépendent des fonctions $g$ et $f$ et du terme de phase $\phi_{m,n}$ , et dont les éléments principaux sont présentés en annexe A, qui fait partie intégrante de la présente description, et $\Im\left\{\beta_{m',n'}^{(m,n)}\right\}$

désigne la partie imaginaire de $\beta_{m',n'}^{(m,n)}$ .

La combinaison linéaire dans cet exemple est appliquée à $y_{m,n}^{(c)}$ et $y_{m+1,n}^{(c)}$ comme suit, de façon à annuler ou à réduire l'interférence imaginaire, déterminée à partir de l'équation (8), affectant le pilote central localisé à l'emplacement $(m,n)$ :

$$t_1 y_{m,n}^{(c)} + t_2 y_{m+1,n}^{(c)} = H_{m,n}^{(c)}\left(t_1 a_{m,n}^{(r)} + t_2 a_{m+1,n}^{(r)} + j\left(t_1 a_{m,n}^{(i)} + t_2 a_{m+1,n}^{(i)}\right)\right), \qquad (9)$$

avec :

- $y_{m,n}^{(c)}$ le signal reçu (complexe) à l'emplacement $(m,n)$ ;

- $y_{m+1,n}^{(c)}$ le signal reçu (complexe) à l'emplacement $(m+1,n)$

- $H_{m,n}^{(c)}$ le coefficient complexe représentatif du canal de transmission à l'emplacement $(m,n)$, tel que $H_{m,n}^{(c)} \approx H_{m+1,n}^{(c)}$ ;

- $a_{m,n}^{(r)}$ et $a_{m,n}^{(i)}$ des valeurs réelles égales respectivement à la partie réelle et à la partie imaginaire de la valeur d'un pilote central à l'emplacement $(m,n)$ ;

- $a_{m+1,n}^{(r)}$ et $a_{m+1,n}^{(i)}$ des valeurs réelles égales respectivement à la partie réelle et à la partie imaginaire de la valeur d'un pilote central à l'emplacement $(m+1,n)$ ;

- $t_1$ et $t_2$ des coefficients tels que $t_1 a_{m,n}^{(i)} + t_2 a_{m+1,n}^{(i)} = 0$

La relation de proportionnalité liant, en émission, les valeurs réelles des éléments de données des symboles d'extrémité encadrant les pilotes centraux, permet de déterminer les valeurs réelles $t_1$ et $t_2$ en réception, de façon à annuler ou réduire l'interférence imaginaire affectant lesdits pilotes centraux.

On considère par exemple un cas particulier dans lequel les valeurs de $t_1$ et $t_2$ sont telles que $t_1 = t_2 = 1$, avec une phase $\phi_{m,n} = \dfrac{\pi}{2}(n+m+2mn)$ .

L'équation (9) s'écrit alors :

$$y_{m,n}^{(c)} + y_{m+1,n}^{(c)} = H_{m,n}^{(c)}\left(a_{m,n}^{(r)} + a_{m+1,n}^{(r)}\right) \qquad \text{(9bis)}$$

Les valeurs réelles $a_{m,n}^{(r)}$ et $a_{m+1,n}^{(r)}$ étant connues, il en résulte que l'estimation du canal est obtenue par :

$$H_{m,n}^{(c)} = \frac{y_{m,n}^{(c)} + y_{m+1,n}^{(c)}}{a_{m,n}^{(r)} + a_{m+1,n}^{(r)}}$$

Dans ce cas particulier, l'estimation du canal est alors obtenue par addition des signaux aux fréquences m et m+1 pour les pilotes centraux aux emplacements ($m,n$) et ($m + 1,$n).

Dans un deuxième exemple, on considère un canal sensiblement invariant en temps aux emplacements ($m, n$) et ($m, n$+1), et modélisable par un coefficient complexe par sous-porteuse $H_{m,n}$, où $m$ est l'indice de la sous-porteuse et $n$ celui d'un symbole central, et alors on a :

$$H_{m,n}^{(c)} \approx H_{m,n+1}^{(c)}$$

Le signal reçu, en tout emplacement ($m,n$) du réseau temps/fréquence, peut s'interpréter comme le résultat du produit d'un canal complexe par une valeur complexe, c'est-à-dire : $y_{m,n}^{(c)} = H_{m,n}^{(c)} a_{m,n}^{(c)} = H_{m,n}^{(c)}\left(a_{m,n}^{(r)} + ja_{m,n}^{(i)}\right)$,

où $a_{m,n}^{(r)}$ et $a_{m,n}^{(i)}$ sont des valeurs réelles (l'exposant (r) indiquant la partie réelle d'une valeur complexe, et l'exposant (i) la partie imaginaire).

De même, on peut écrire, pour le signal reçu, en tout emplacement ($m, n+l$) du réseau temps/fréquence :

$$y_{m,n+1}^{(c)} = H_{m,n+1}^{(c)}\left(a_{m,n+1}^{(r)} + ja_{m,n+1}^{(i)}\right) \approx H_{m,n}^{(c)}\left(a_{m,n+1}^{(r)} + ja_{m,n+1}^{(i)}\right)$$

Dans ce cas, la combinaison linéaire est appliquée à $y_{m,n}^{(c)}$ et $y_{m,n+1}^{(c)}$ comme suit, de façon à annuler ou à réduire l'interférence imaginaire affectant le pilote central localisé à l'emplacement ($m,n$) :

$$t_1 y_{m,n}^{(c)} + t_2 y_{m,n+1}^{(c)} = H_{m,n}^{(c)}\left(t_1 a_{m,n}^{(r)} + t_2 a_{m,n+1}^{(r)} + j\left(t_1 a_{m,n}^{(i)} + t_2 a_{m,n+1}^{(i)}\right)\right) \qquad (10)$$

avec :

-   $y_{m,n}^{(c)}$ le signal reçu (complexe) à l'emplacement ($m,n$) ;

-   $y_{m,n+1}^{(c)}$ le signal reçu (complexe) à l'emplacement ($m,n + 1$) ;

-   $H_{m,n}^{(c)}$ le coefficient complexe représentatif du canal de transmission à l'emplacement ($m,n$), tel que $H_{m,n}^{(c)} \approx H_{m,n+1}^{(c)}$ ;

-   $a_{m,n}^{(r)}$ et $a_{m,n}^{(i)}$ des valeurs réelles égales respectivement à la partie réelle et à la partie imaginaire de la valeur d'un pilote central à l'emplacement ($m,n$) ;

-   $a_{m,n+1}^{(r)}$ et $a_{m,n+1}^{(i)}$ des valeurs réelles égales respectivement à la partie réelle et à la partie imaginaire de la valeur d'un pilote central à l'emplacement (m,n+1) ;

- $t_1$ et $t_2$ des coefficients tels que $t_1 a_{m,n}^{(i)} + t_2 a_{m,n+1}^{(i)} = 0$.

La relation de proportionnalité liant, en émission, les valeurs des éléments de données des symboles d'extrémité encadrant les pilotes centraux, permet de déterminer les valeurs réelles $t_1$ et $t_2$ en réception, de façon à annuler ou réduire l'interférence imaginaire affectant lesdits pilotes centraux.

On considère par exemple un cas particulier dans lequel les valeurs de $t_1$ et $t_2$ sont telles que $t_1 = t_2 = 1$, avec

une phase $\phi_{m,n} = \dfrac{\pi}{2}(n+m)$.

L'équation (10) s'écrit alors :

$$y_{m,n}^{(c)} + y_{m,n+1}^{(c)} = H_{m,n}^{(c)}\left(a_{m,n}^{(r)} + a_{m,n+1}^{(r)}\right) \qquad (10bis)$$

Les valeurs réelles $a_{m,n}^{(r)}$ et $a_{m,n+1}^{(r)}$ étant connues, il en résulte que l'estimation du canal est obtenue par :

$$H_{m,n}^{(c)} = \dfrac{y_{m,n}^{(c)} + y_{m,n+1}^{(c)}}{a_{m,n}^{(r)} + a_{m,n+1}^{(r)}}$$

L'estimation du canal est alors obtenue par addition des signaux de même fréquence $m$ consécutifs en temps, pour les symboles centraux localisés aux emplacements $n$ et $n+1$.

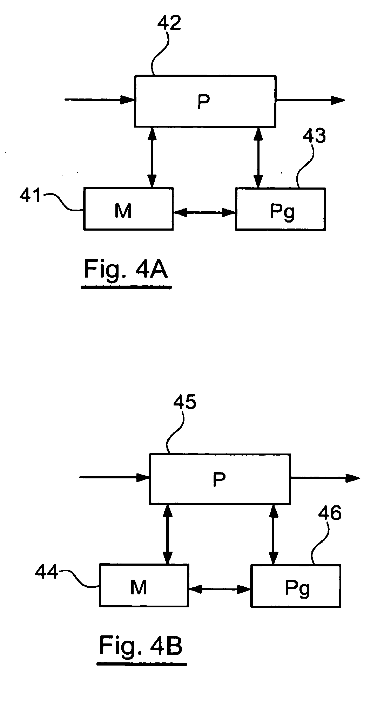

On présente désormais, en relation avec les figures 4A et 4B, les structures simplifiées d'un dispositif d'émission et d'un dispositif de réception selon le mode de réalisation particulier décrit ci-dessus.

Comme illustré en figure 4A, un tel dispositif d'émission comprend une mémoire 41, une unité de traitement 42, équipée par exemple d'un microprocesseur μP, et pilotée par le programme d'ordinateur 43, mettant en oeuvre le procédé d'émission selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée des données à transmettre, sous la forme d'éléments de données informatifs. Le microprocesseur de l'unité de traitement 42 met en oeuvre les étapes du procédé d'émission décrit précédemment, de façon à construire un signal multiporteuse comprenant au moins un préambule formé d'au moins trois symboles consécutifs, comprenant au moins deux symboles d'extrémité encadrant au moins un symbole central composé de pilotes, et destiné à permettre une estimation dudit canal de transmission. En particulier, lesdits symboles d'extrémité portent, au moins sur certaines de leurs porteuses voisines d'un pilote central, des éléments de données organisés en un groupe d'éléments, et dont les valeurs réelles en émission sont liées par une relation de proportionnalité, permettant de réduire ou d'annuler, en réception, une interférence affectant ledit pilote central.

Pour cela, le dispositif d'émission comprend des moyens d'insertion dans le signal multiporteuse d'au moins un préambule formé d'au moins trois symboles consécutifs, comprenant au moins deux symboles d'extrémité encadrant au moins un symbole central composé de pilotes. Ces moyens sont pilotés par le microprocesseur de l'unité de traitement 42.

L'unité de traitement 42 délivre en sortie le signal multiporteuse précité.

Un dispositif de réception comme illustré en figure 4B comprend une mémoire 44, une unité de traitement 45, équipée par exemple d'un microprocesseur μP, et pilotée par le programme d'ordinateur 46, mettant en oeuvre le procédé de réception selon l'invention.

A l'initialisation, les instructions de code du programme d'ordinateur 46 sont par exemple chargées dans une mémoire RAM avant d'être exécutées par le processeur de l'unité de traitement 45. L'unité de traitement 45 reçoit en entrée le signal multiporteuse reçu $y(t)$. Le microprocesseur de l'unité de traitement 45 met en oeuvre les étapes du procédé de réception décrit précédemment, selon les instructions du programme d'ordinateur 46, pour estimer le canal de transmission et décoder les données reçues. Pour cela, le dispositif de réception comprend, pour au moins un pilote central : des moyens d'annulation ou de réduction d'une interférence affectant ledit pilote central, tenant compte d'une relation de proportionnalité liant les valeurs réelles portées par chaque élément dudit groupe d'éléments et des moyens d'estimation dudit canal de transmission, tenant compte du résultat de ladite étape d'annulation ou de réduction. Ces moyens sont pilotés par le microprocesseur de l'unité de traitement 45.

**ANNEXE A**

**Calcul des constantes** $\beta^{(m_0,n_0)}_{m_0+p,n_0+q}$ **liées aux fonctions de base de modulation et à la phase**

On présente ci-après une méthode de calcul des constantes réelles $\beta^{(m_0,n_0)}_{m_0+p,n_0+q}$ telles que :

$$\hat{a}^{(i)}_{m_0,n_0} \approx \sum_{p,q \in \Omega_{P,Q}} \Im\left\{\beta^{(m_0,n_0)}_{m_0+p,n_0+q}\right\} a^{(r)}_{m_0+p,n_0+q} \qquad (11)$$

où $\Im\left\{\beta^{(m,n)}_{m',n'}\right\}$ désigne la partie imaginaire de $\beta^{(m,n)}_{m',n'}$.

On rappelle tout d'abord que le signal multiporteuse émis peut s'écrire sous la forme :

$$s(t) = \sum_{n} \sum_{m=0}^{M-1} a_{m,n} \underbrace{g(t-n\tau_0) e^{j2\pi m\nu_0 t} e^{j\phi_{m,n}}}_{g_{m,n}(t)} \qquad (12)$$

Si par ailleurs on suppose que le canal de transmission est parfait (en le prenant par exemple égal à (1), au moins localement, l'estimée des coefficients transmis est donnée par :

$$\hat{a}^{(c)}_{m,n} = \sum_{n',m'} \left[\int f^*_{m,n}(t) g_{m',n'}(t) dt\right] a_{m',n'} \qquad (13)$$

En posant :

$$\beta^{(m,n)}_{m',n'} = \int f^*_{m,n}(t) g_{m',n'}(t) dt \qquad (14),$$

on obtient, pour des fonctions f et g biorthogonales, $\Re\left\{\hat{a}^{(c)}_{m,n}\right\} = a_{m,n}$, soit :

$$\hat{a}^{(c)}_{m,n} = a^{(r)}_{m,n} + j\hat{a}^{(i)}_{m,n} = a_{m,n} + j\Im\left\{\sum_{n',m'} \beta^{(m,n)}_{m',n'} a_{m',n'}\right\} = a_{m,n} + j\sum_{n',m'} \Im\left\{\beta^{(m,n)}_{m',n'}\right\} a_{m',n'}$$

$$(15)$$

Il subsiste donc un terme d'interférence, qu'il est possible d'évaluer pour tout pilote ($a_{m0,n0}$) dans un voisinage $P \times Q$ en évaluant $\beta_{m',n'}$.

On remarque aussi que :

$$\hat{a}^{(i)}_{m,n} = \sum_{n',m'} \Im\left\{\beta^{(m,n)}_{m',n'}\right\} a_{m',n'} \qquad (16).$$

En développant l'expression des fonctions de base de modulation et de démodulation, on obtient :

$$\beta_{m',n'}^{(m,n)} = e^{j\left(\phi_{m',n'} - \phi_{m,n}\right)} \int f^*\left(t - n\tau_0\right) g\left(t - n'\tau_0\right) e^{j2\pi(m'-m)\nu_0 t} dt \qquad (17)$$

Dans un voisinage $P \times Q$ de $(m_0, n_0)$, cette équation se réécrit en posant $m = m_0$, $n = n_0$, $m' = m_0 + p$ et $n' = n_0 + q$, ce qui donne :

$$\beta_{m_0+p,n_0+q}^{(m_0,n_0)} = e^{j\left(\phi_{m_0+p,n_0+q} - \phi_{m_0,n_0}\right)} \int f^*\left(t - n_0\tau_0\right) g\left(t - (n_0+p)\tau_0\right) e^{j2\pi p\nu_0 t} dt \quad (18)$$

$$\beta_{m_0+p,n_0+q}^{(m_0,n_0)} = (-1)^{n_0 p} e^{j\left(\phi_{m_0+p,n_0+q} - \phi_{m_0,n_0}\right)} \int f^*(t) g\left(t - p\tau_0\right) e^{j2\pi p\nu_0 t} dt \qquad (19)$$

On constate donc que les coefficients $\beta$ s'obtiennent à partir de la fonction d'ambiguïté croisée de $f$ et $g$ (« cross-ambiguïty ») dans le cas biorthogonal, ou tout simplement à partir de la fonction d'ambiguïté de $g$ dans le cas orthogonal.

Pour son évaluation numérique, $f$ et g étant réalisés avec des filtres de longueur finie, ce calcul est plus précis s'il est effectué directement en discret :

$$\beta_{m_0+p,n_0+q}^{(m_0,n_0)} = (-1)^{n_0 p} e^{j\left(\phi_{m_0+p,n_0+q} - \phi_{m_0,n_0}\right)} \sum_k f^*[k] g[k - qN] e^{j\frac{2\pi}{2N} p\left(k - \frac{D}{2}\right)} \quad (20)$$

avec $D = \alpha N - \gamma$ et $M = 2N$.

Pour son implantation côté réception d'un transmultiplexeur, il est préférable de tenir compte du fait que ces coefficients sont à appliquer en prenant en compte un retard de $\alpha$ échantillons.

On présente ci-après deux exemples de détermination des coefficients $\beta$, dans le cadre d'une modulation de type OFDM/OQAM présentant une fonction prototype continue réelle et paire.

1. Phase définie par $\phi_{m,n} = \dfrac{\pi}{2}(n + m)$

En posant :

$$\phi_{m,n} = \frac{\pi}{2}(n + m) \qquad (21),$$

l'équation (18) devient :

$$\beta_{m_0+p,n_0+q}^{(m_0,n_0)} = (-1)^{n_0 p} e^{j\frac{\pi}{2}(p+q)} \int g(t) g\left(t - q\tau_0\right) e^{j2\pi p\nu_0 t} dt \qquad (22).$$

On introduit ensuite la fonction d'ambiguïté d'une fonction $x$ avec la notation utilisée dans le document de brevet WO 02/25884 précité :

$$A_x(\tau, \nu) = \int x\left(t + \frac{\tau}{2}\right) \cdot x^*\left(t - \frac{\tau}{2}\right) e^{-j2\pi\nu t} dt$$

En effectuant le changement de variable $t = t' + \dfrac{q\tau_0}{2}$ dans l'équation (22), on obtient :

$$\beta^{(m_0,n_0)}_{m_0+p,n_0+q} = (-1)^{n_0 p}\, e^{j\frac{\pi}{2}(p+q)} \int g\left(t+\frac{q\tau_0}{2}\right) g\left(t-\frac{q\tau_0}{2}\right) e^{j2\pi p v_0\left(t+\frac{q\tau_0}{2}\right)} dt$$

Sachant que $v_0 \tau_0 = \dfrac{1}{2}$, on obtient ensuite :

$$\beta^{(m_0,n_0)}_{m_0+p,n_0+q} = -(-1)^{n_0 p}\, e^{j\frac{\pi}{2}((p+q)+pq)} A\left(q\tau_0, p v_0\right).$$

Sachant que dans ce cas précis la fonction $A$ est réelle, on peut alors vérifier que le coefficient $\beta_{p,q}$ est un imaginaire pur.

2. *Phase définie par* $\phi_{m,n} = \dfrac{\pi}{2}\left(n+m\right) + \pi nm$

En effectuant le même calcul que précédemment en posant $\phi_{m,n} = \dfrac{\pi}{2}\left(n+m\right) + \pi nm$, on obtient :

$$\beta^{(m_0,n_0)}_{m_0+p,n_0+q} = -(-1)^{m_0 q+pq}\, e^{j\frac{\pi}{2}((p+q)+pq)} A\left(q\tau_0, p v_0\right)$$

.

## Revendications

**1.** Procédé de réception d'un signal reçu correspondant à un signal multiporteuse émis par au moins un émetteur via un canal de transmission,
ledit signal multiporteuse étant formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
au moins un préambule (21) formé d'au moins trois symboles consécutifs et destiné à permettre une estimation dudit canal de transmission étant inséré dans ledit signal multiporteuse, lesdits symboles de préambule comprenant au moins deux symboles d'extrémité ($21_1$, $21_3$) encadrant au moins un symbole central ($21_2$) composé de pilotes, dits pilotes centraux (23), tel que lesdits symboles d'extrémité portent, au moins sur certaines de leurs porteuses voisines d'un pilote central, des éléments de données organisés en au moins un groupe d'éléments (24), cararctérisé en ce que les éléments de données d'au moins un groupe d'éléments étant des éléments de données informatifs, ledit procédé de réception comprend, pour au moins un pilote central :

- une étape (31) d'annulation ou de réduction d'une interférence affectant ledit pilote central, tenant compte d'une relation de proportionnalité liant les valeurs réelles portées par chaque élément dudit groupe d'éléments de données informatifs ;
- une étape (32) d'estimation dudit canal de transmission, tenant compte du résultat de ladite étape d'annulation ou de réduction.

**2.** Procédé de réception selon, la revendication 1, **caractérisé en ce que**, ledit canal de transmission étant sensiblement constant sur au moins deux fréquences consécutives délimitant une région d'intérêt, ladite étape (31) d'annulation ou de réduction met en oeuvre une combinaison linéaire en fréquence desdits pilotes centraux localisés dans ladite région d'intérêt.

**3.** Procédé de réception selon la revendication 1, **caractérisé en ce que**, ledit canal de transmission étant sensiblement constant sur au moins deux instants consécutifs formant une région d'intérêt, et ledit préambule (21) comprenant au moins deux symboles centraux, ladite étape (31) d'annulation ou de réduction met en oeuvre une combinaison linéaire en temps desdits pilotes centraux localisés dans ladite région d'intérêt.

**4.** Dispositif de réception d'un signal reçu correspondant à un signal multiporteuse émis par au moins un émetteur via un canal de transmission,
ledit signal multiporteuse étant formé d'une succession temporelle de symboles constitués d'un ensemble d'éléments de données à valeurs réelles comprenant :

   - des éléments de données informatifs, et
   - pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
au moins un préambule (21) formé d'au moins trois symboles consécutifs et destiné à permettre une estimation dudit canal de transmission étant inséré dans ledit signal multiporteuse, lesdits symboles de préambule comprenant au moins deux symboles d'extrémité ($21_1$, $21_3$) encadrant au moins un symbole central ($21_2$) composé de pilotes, dits pilotes centraux (23), tel que lesdits symboles d'extrémité portent, au moins sur certaines de leurs porteuses voisines d'un pilote central, des éléments de données organisés en au moins un groupe d'éléments (24), **caractérisé en ce que** les éléments de données d'au moins un groupe d'éléments étant des éléments de données informatifs, ledit dispositif de réception comprend, pour au moins un pilote central (23) :

   - des moyens d'annulation ou de réduction d'une interférence affectant ledit pilote central, tenant compte d'une relation de proportionnalité liant les valeurs réelles portées par chaque élément dudit groupe d'éléments de données informatifs ;
   - des moyens d'estimation dudit canal de transmission, tenant compte de la sortie desdits moyens d'annulation ou de réduction.

**5.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception selon l'une au moins des revendications 1 à 3.

**6.** Procédé d'émission d'un signal multiporteuse, destiné à être transmis via un canal de transmission, formé d'une succession temporelle de symboles constitués d'un ensemble d'éléments de données à valeurs réelles comprenant :

   - des éléments de données informatifs, et
   - pour au moins certains desdits symboles, des éléments de données de référence appelés pilotes dont la valeur et l'emplacement à l'émission sont connus d'au moins un récepteur destiné à effectuer une réception dudit signal multiporteuse,
   chacun desdits éléments de données modulant une fréquence porteuse dudit signal, une fréquence porteuse modulée par un desdits éléments de données étant appelée porteuse,
   ledit procédé d'émission insère dans ledit signal multiporteuse au moins un préambule (21) formé d'au moins trois symboles consécutifs, lesdits symboles de préambule comprenant au moins deux symboles d'extrémité ($21_1$, $21_3$) encadrant au moins un symbole central ($21_2$) composé de pilotes, dits pilotes centraux (23),
   tel que lesdits symboles d'extrémité portent, au moins sur certaines de leurs porteuses voisines d'un pilote central, des éléments de données organisés en au moins un groupe d'éléments (24), les valeurs entre chaque élément d'un groupe d'éléments étant liées par une relation de proportionnalité permettant d'annuler ou de réduire, en réception, une interférence affectant ledit pilote central, **caractérisé en ce que** les éléments de données d'au moins un groupe d'éléments sont des éléments de données informatifs,
   de façon que ledit préambule (21) permette de déterminer une estimation dudit canal de transmission.

**7.** Procédé d'émission selon la revendication 6, **caractérisé en ce que** lesdits éléments de données d'au moins un groupe d'éléments sont des pilotes.

**8.** Procédé d'émission selon l'une quelconque des revendications 6 et 7, **caractérisé en ce que** lesdits groupes comprennent chacun quatre éléments de données, chaque élément de données d'un même groupe d'éléments portant une valeur identique, en valeur absolue.

**9.** Dispositif d'émission d'un signal multiporteuse, destiné à être transmis via un canal de transmission, formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
dispositif d'émission comprend des moyens d'insertion dans ledit signal multiporteuse d'au moins un préambule $(21)$ formé d'au moins trois symboles consécutifs, lesdits symboles de préambule comprenant au moins deux symboles d'extrémité $(21_1, 21_3)$ encadrant au moins un symbole central $(21_2)$ composé de pilotes, dits pilotes centraux $(23)$,
tel que lesdits symboles d'extrémité portent, au moins sur certaines de leurs porteuses voisines d'un pilote central, des éléments de données organisés en au moins un groupe d'éléments $(24)$, les valeurs entre chaque élément d'un groupe d'éléments étant liées par une relation de proportionnalité permettant d'annuler ou de réduire, en réception, une interférence affectant ledit pilote central, **caractérisé en ce que** les éléments de données d'au moins un groupe d'éléments sont des éléments de données informatifs,
de façon que ledit préambule $(21)$ permette de déterminer une estimation dudit canal de transmission.

**10.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission selon l'une au moins des revendications 6 à 8.

**11.** Signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
comprenant au moins un préambule $(21)$ formé d'au moins trois symboles consécutifs, lesdits symboles de préambule comprenant au moins deux symboles d'extrémité $(21_1, 21_3)$ encadrant au moins un symbole central $(21_2)$ composé de pilotes, dits pilotes centraux $(23)$,
tel que lesdits symboles d'extrémité portent, au moins sur certaines de leurs porteuses voisines d'un pilote central, des éléments de données organisés en au moins un groupe d'éléments, les valeurs entre chaque élément d'un groupe d'éléments étant liées par une relation de proportionnalité permettant d'annuler ou de réduire, en réception, une interférence affectant ledit pilote central $(23)$, **caractérisé en ce que** les éléments de données d'au moins un groupe d'éléments sont des éléments de données informatifs,
de façon que ledit préambule $(21)$ permette de déterminer une estimation d'un canal de transmission entre un émetteur destiné à émettre ledit signal multiporteuse et ledit récepteur.

**Claims**

**1.** Method for receiving a received signal corresponding to a multicarrier signal transmitted by at least one transmitter via a transmission channel,

said multicarrier signal being formed by a temporal succession of symbols consisting of a set of data elements with real values comprising:

- informative data elements, and
- for at least some of said symbols, reference data elements called pilots, the value and the placement of which in transmission are known to at least one receiver intended to receive said multicarrier signal,

each of said data elements modulating a carrier frequency of said signal, a carrier frequency modulated by one of said data elements being called carrier,
at least one preamble (21) formed by at least three consecutive symbols and intended to allow for an estimation of said transmission channel being inserted into said multicarrier signal, said preamble symbols comprising at least two end symbols ($21_1$, $21_3$) framing at least one central symbol ($21_2$) consisting of pilots, called central pilots (23), such that said end symbols carry, at least on some of their carriers adjacent to a central pilot, data elements organized into at least one group of elements (24),
**characterized in that** the data elements of at least one group of elements being informative data elements, said reception method comprises, for at least one central pilot:

- a step (31) of cancelling or of reducing an interference affecting said central pilot, taking into account a proportionality relationship linking the real values carried by each element of said group of informative data elements;
- a step (32) of estimating said transmission channel, taking into account the result of said cancellation or reduction step.

2. Reception method according to Claim 1, **characterized in that**, said transmission channel being substantially constant on at least two consecutive frequencies delimiting a region of interest, said cancellation or reduction step (31) implements a linear frequency combination of said central pilots located in said region of interest.

3. Reception method according to Claim 1, **characterized in that**, said transmission channel being substantially constant on at least two consecutive instants forming a region of interest, and said preamble (21) comprising at least two central symbols, said cancellation or reduction step (31) implements a linear time combination of said central pilots located in said region of interest.

4. Device for receiving a received signal corresponding to a multicarrier signal transmitted by at least one transmitter via a transmission channel,
said multicarrier signal being formed by a temporal succession of symbols consisting of a set of data elements with real values comprising:

- informative data elements, and
- for at least some of said symbols, reference data elements called pilots, the value and the placement of which in transmission are known to at least one receiver intended to receive said multicarrier signal,

each of said data elements modulating a carrier frequency of said signal, a carrier frequency modulated by one of said data elements being called carrier,
at least one preamble (21) formed by at least three consecutive symbols and intended to allow for an estimation of said transmission channel being inserted into said multicarrier signal, said preamble symbols comprising at least two end symbols ($21_1$, $21_3$) framing at least one central symbol ($21_2$) consisting of pilots, called central pilots (23), such that said end symbols carry, at least on some of their carriers adjacent to a central pilot, data elements organized into at least one group of elements (24),
**characterized in that** the data elements of at least one group of elements being informative data elements, said reception device comprises, for at least one central pilot (23):

- means for cancelling or for reducing an interference affecting said central pilot, taking into account a proportionality relationship linking the real values carried by each element of said group of informative data elements;
- means for estimating said transmission channel, taking into account the output of said cancellation or reduction means.

5. Computer program product that can be downloaded from a communication network and/or stored on a computer-readable medium and/or that can be executed by a processor, comprising program code instructions for implementing the reception method according to at least one of Claims 1 to 3.

6. Method for transmitting a multicarrier signal, intended to be transmitted via a transmission channel, formed by a temporal succession of symbols consisting of a set of data elements with real values comprising:

- informative data elements, and
- for at least some of said symbols, reference data elements called pilots, the value and the placement of which in transmission are know to at least one receiver intended to receive said multicarrier signal,

each of said data elements modulating a carrier frequency of said signal, a carrier frequency modulated by one of said data elements being called carrier,
said transmission method inserts into said multicarrier signal at least one preamble (21) formed by at least three consecutive symbols, said preamble symbols comprising at least two end symbols ($21_1$, $21_3$) framing at least one central symbol ($21_2$) consisting of pilots, called central pilots (23),
such that said end symbols carry, at least on some of their carriers adjacent to a central pilot, data elements organized into at least one group of elements (24), the values between each element of a group of elements being linked by a proportionality relationship that makes it possible to cancel or reduce, in reception, an interference affecting said central pilot, **characterized in that** the data elements of at least one group of elements are informative data elements, so that said preamble (21) can be used to determine an estimation of said transmission channel.

7. Transmission method according to Claim 6, **characterized in that** said data elements of at least one group of elements are pilots.

8. Transmission method according to any one of Claims 6 and 7, **characterized in that** said groups each comprise four data elements, each data element of one and the same group of elements bearing an identical value, as an absolute value.

9. Device for transmitting a multicarrier signal, intended to be transmitted via a transmission channel, formed by a temporal succession of symbols consisting of a set of data elements with real values comprising:

- informative data elements, and
- for at least some of said symbols, reference data elements called pilots, the value and the placement of which in transmission are know to at least one receiver intended to receive said multicarrier signal,

each of said data elements modulating a carrier frequency of said signal, a carrier frequency modulated by one of said data elements being called carrier,
the transmission device comprising means for inserting into said multicarrier signal at least one preamble (21) formed by at least three consecutive symbols, said preamble symbols comprising at least two end symbols ($21_1$, $21_3$) framing at least one central symbol ($21_2$) consisting of pilots, called central pilots (23), such that said end symbols carry, at least on some of their carriers adjacent to a central pilot, data elements organized into at least one group of elements (24), the values between each element of a group of elements being linked by a proportionality relationship that makes it possible to cancel or reduce, in reception, an interference affecting said central pilot, **characterized in that** the data elements of at least one group of elements are informative data elements, so that said preamble (21) can be used to determine an estimation of said transmission channel.

10. Computer program product that can be downloaded from a communication network and/or stored on a computer-readable medium and/or that can be executed by a processor, comprising program code instructions for implementing the transmission method according to at least one of Claim 6 to 8.

11. Multicarrier signal formed by a temporal succession of symbols consisting of a set of data elements with real values comprising:

- informative data elements, and
- for at least some of said symbols, reference data elements called pilots, the value and the placement of which in transmission are known to at least one receiver intended to receive said multicarrier signal,

each of said data elements modulating a carrier frequency of said signal, a carrier frequency modulated by one of said data elements being called carrier,

comprising at least one preamble (21) formed by at least three consecutive symbols, said preamble symbols comprising at least two end symbols ($21_1$, $21_3$) framing at least one central symbol ($21_2$) consisting of pilots, called central pilots (23), such that said end symbols carry, at least on some of their carriers adjacent to a central pilot, data elements organized into at least one group of elements, the values between each element of a group of elements being linked by a proportionality relationship that makes it possible to cancel or reduce, in reception, an interference affecting said central pilot (23), **characterized in that** the data elements of at least one group of elements are informative data elements,

so that said preamble (21) can be used to determine an estimation of a transmission channel between a transmitter intended to transmit said multicarrier signal and said receiver.

**Patentansprüche**

1. Verfahren zum Empfang eines empfangenen Signals entsprechend einem Mehrträgersignal, das von mindestens einem Sender über einen Übertragungskanal gesendet wird,

wobei das Mehrträgersignal aus einer zeitlichen Folge von Symbolen geformt wird, die aus einer Einheit von Datenelementen mit realen Werten bestehen, die enthält:

    - informative Datenelemente, und

    - für mindestens bestimmte der Symbole Pilotdaten genannte Bezugs-Datenelemente, deren Wert und Anordnung beim Senden mindestens einem Empfänger bekannt sind, der dazu bestimmt ist, einen Empfang des Mehrträgersignals durchzuführen,

wobei jedes der Datenelemente eine Trägerfrequenz des Signals moduliert, wobei eine durch eines der Datenelemente modulierte Trägerfrequenz Träger genannt wird,

wobei mindestens eine Präambel (21), die von mindestens drei aufeinanderfolgenden Symbolen geformt wird und dazu bestimmt ist, eine Schätzung des Übertragungskanals zu ermöglichen, in das Mehrträgersignal eingefügt ist, wobei die Präambelsymbole mindestens zwei Endsymbole ($21_1$, $21_3$) enthalten, die mindestens ein zentrales Symbol ($21_2$) umrahmen, das aus Pilotdaten besteht, zentrale Pilotdaten (23) genannt, derart, dass die Endsymbole auf mindestens bestimmten ihrer Träger, die einem zentralen Pilotdatenwert benachbart sind, Datenelemente tragen, die in mindestens einer Gruppe von Elementen (24) organisiert sind, **dadurch gekennzeichnet, dass** die Datenelemente mindestens einer Gruppe von Elementen informative Datenelemente sind, wobei das Empfangsverfahren für mindestens einen zentralen Pilotdatenwert enthält:

    - einen Schritt (31) der Annullierung oder Verringerung einer den zentralen Pilotdatenwert betreffenden Interferenz, unter Berücksichtigung einer Proportionalitätsbeziehung, die die von jedem Element der Gruppe von informativen Datenelementen getragenen realen Werte verbindet;

    - einen Schritt (32) der Schätzung des Übertragungskanals, der das Ergebnis des Schritts der Annullierung oder Verringerung berücksichtigt.

2. Empfangsverfahren nach Anspruch 1, **dadurch gekennzeichnet, dass**, da der Übertragungskanal über mindestens zwei aufeinanderfolgende Frequenzen, die einen Interessenbereich begrenzen, im Wesentlichen konstant ist, der Schritt (31) der Annullierung oder Verringerung eine lineare Frequenzkombination der zentralen Pilotdaten anwendet, die sich in dem Interessenbereich befinden.

3. Empfangsverfahren nach Anspruch 1, **dadurch gekennzeichnet, dass**, da der Übertragungskanal über mindestens zwei einen Interessenbereich bildende aufeinanderfolgende Zeitpunkte im Wesentlichen konstant ist, und die Präambel (21) mindestens zwei zentrale Symbole enthält, der Schritt (31) der Annullierung oder Verringerung eine zeitlich lineare Kombination der zentralen Pilotdaten anwendet, die sich in dem Interessenbereich befinden.

4. Vorrichtung zum Empfang eines empfangenen Signals entsprechend einem Mehrträgersignal, das von mindestens einem Sender über einen Übertragungskanal gesendet wird,

wobei das Mehrträgersignal von einer zeitlichen Folge von Symbolen geformt wird, die aus einer Einheit von Datenelementen mit realen Werten bestehen, die enthält:

    - informative Datenelementen, und

    - für mindestens bestimmte der Symbole Pilotdaten genannte Bezugs-Datenelemente, deren Wert und Anordnung beim Senden mindestens einem Empfänger bekannt sind, der dazu bestimmt ist, einen Empfang des Mehrträgersignals durchzuführen,

wobei jedes der Datenelemente eine Trägerfrequenz des Signals moduliert, wobei eine durch eines der Datenelemente modulierte Trägerfrequenz Träger genannt wird,
wobei mindestens eine Präambel (21), die von mindestens drei aufeinanderfolgenden Symbolen geformt wird und dazu bestimmt ist, eine Schätzung des Übertragungskanals zu ermöglichen, in das Mehrträgersignal eingefügt ist, wobei die Präambelsymbole mindestens zwei Endsymbole ($21_1$, $21_3$) enthalten, die mindestens ein zentrales Symbol ($21_2$) umrahmen, das aus Pilotdaten besteht, zentrale Pilotdaten (23) genannt, derart, dass die Endsymbole auf mindestens bestimmten ihrer Träger, die einem zentralen Pilotdatenwert benachbart sind, Datenelemente tragen, die in mindestens einer Gruppe von Elementen (24) organisiert sind, **dadurch gekennzeichnet, dass** Datenelemente mindestens einer Gruppe von Elementen informative Datenelemente sind,
wobei die Empfangsvorrichtung für mindestens einen zentralen Pilotdatenwert (23) enthält:

- Einrichtungen zur Annullierung oder Verringerung einer den zentralen Pilotdatenwert betreffenden Interferenz, unter Berücksichtigung einer Proportionalitätsbeziehung, die die von jedem Element der Gruppe von informativen Datenelementen getragenen realen Werte verbindet;
- Einrichtungen zur Schätzung des Übertragungskanals, unter Berücksichtigung des Ausgangs der Einrichtungen zur Annullierung oder Verringerung.

5. Computerprogrammprodukt, das von einem Kommunikationsnetzwerk heruntergeladen und/oder auf einem computerlesbaren Träger gespeichert und/oder von einem Prozessor ausgeführt werden kann, das Programmcodeanweisungen für die Durchführung des Empfangsverfahrens nach mindestens einem der Ansprüche 1 bis 3 enthält.

6. Verfahren zum Senden eines Mehrträgersignals, das dazu bestimmt ist, über einen Übertragungskanal übertragen zu werden, geformt von einer zeitlichen Folge von Symbolen, die aus einer Einheit von Datenelementen mit realen Werten bestehen, die enthält:

- informative Datenelemente, und
- für mindestens bestimmte der Symbole Pilotdaten genannte Bezugs-Datenelemente, deren Wert und Anordnung beim Senden mindestens einem Empfänger bekannt sind, der dazu bestimmt ist, einen Empfang des Mehrträgersignals durchzuführen,

wobei jedes der Datenelemente eine Trägerfrequenz des Signals moduliert, wobei eine durch eines der Datenelemente modulierte Trägerfrequenz Träger genannt wird,
wobei das Sendeverfahren in das Mehrträgersignal mindestens eine Präambel (21) einfügt, die von mindestens drei aufeinanderfolgenden Symbolen geformt wird, wobei die Präambelsymbole mindestens zwei Endsymbole ($21_1$, $21_3$) enthalten, die mindestens ein zentrales Symbol ($21_2$) umrahmen, das aus Pilotdaten besteht, zentrale Pilotdaten (23) genannt,
derart, dass die Endsymbole auf mindestens bestimmten ihrer Träger, die einem zentralen Pilotdatenwert benachbart sind, Datenelemente tragen, die in mindestens einer Gruppe von Elementen (24) organisiert sind, wobei die Werte zwischen jedem Element einer Gruppe von Elementen durch eine Proportionalitätsbeziehung verbunden sind, die es ermöglicht, beim Empfang eine den zentralen Pilotdatenwert betreffende Interferenz zu annullieren oder zu verringern,
**dadurch gekennzeichnet, dass** die Datenelemente mindestens einer Gruppe von Elementen informative Datenelemente sind,
so dass die Präambel (21) es ermöglicht, eine Schätzung des Übertragungskanals zu bestimmen.

7. Sendeverfahren nach Anspruch 6, **dadurch gekennzeichnet, dass** die Datenelemente mindestens einer Gruppe von Elementen Pilotdaten sind.

8. Sendeverfahren nach einem der Ansprüche 6 und 7, **dadurch gekennzeichnet, dass** die Gruppen je vier Datenelemente enthalten, wobei jedes Datenelement einer gleichen Gruppe im Absolutwert einen gleichen Wert trägt.

9. Vorrichtung zum Senden eines Mehrträgersignals, das dazu bestimmt ist, über einen Übertragungskanal übertragen zu werden, das von einer zeitlichen Folge von Symbolen geformt wird, die aus einer Einheit von Datenelementen mit realen Werten bestehen, die enthält:

- informative Datenelemente, und

- für mindestens bestimmte der Symbole Pilotdaten genannte Bezugs-Datenelemente, deren Wert und Anordnung beim Senden mindestens einem Empfänger bekannt sind, der dazu bestimmt ist, einen Empfang des Mehrträgersignals durchzuführen,

wobei jedes der Datenelemente eine Trägerfrequenz des Signals moduliert, wobei eine von einem der Datenelemente modulierte Trägerfrequenz Träger genannt wird,

wobei die Sendevorrichtung Einrichtungen zur Einfügung in das Mehrträgersignal mindestens einer Präambel (21) enthält, die von mindestens drei aufeinanderfolgenden Symbolen geformt wird, wobei die Präambelsymbole mindestens zwei Endsymbole ($21_1$, $21_3$) enthalten, die mindestens ein zentrales Symbol ($21_2$) umrahmen, das aus Pilotdaten besteht, zentrale Pilotdaten (23) genannt,

derart, dass die Endsymbole mindestens auf bestimmten ihrer Träger, die einem zentralen Pilotdatenwert benachbart sind, Datenelemente tragen, die in mindestens einer Gruppe von Elementen (24) organisiert sind, wobei die Werte zwischen jedem Element einer Gruppe von Elementen durch eine Proportionalitätsbeziehung verbunden sind, die es ermöglicht, beim Empfang eine den zentralen Pilotdatenwert betreffende Interferenz zu annullieren oder zu reduzieren,

**dadurch gekennzeichnet, dass** die Datenelemente mindestens einer Gruppe von Elementen informative Datenelemente sind,

damit die Präambel (21) es ermöglicht, eine Schätzung des Übertragungskanals zu bestimmen.

10. Computerprogrammprodukt, das von einem Kommunikationsnetzwerk heruntergeladen und/oder auf einem computerlesbaren Träger gespeichert und/oder von einem Prozessor ausgeführt werden kann, das Programmcodeanweisungen für die Durchführung des Sendeverfahrens nach mindestens einem der Ansprüche 6 bis 8 enthält.

11. Mehrträgersignal, das von einer zeitlichen Folge von Symbolen geformt wird, die aus einer Einheit von Datenelementen mit realen Wertem bestehen, die enthält:

- informative Datenelemente, und
- für mindestens bestimmte der Symbole Pilotdaten genannte Bezugs-Datenelemente, deren Wert und Anordnung beim Senden mindestens einem Empfänger bekannt sind, der dazu bestimmt ist, einen Empfang des Mehrträgersignals durchzuführen,

wobei jedes der Datenelemente eine Trägerfrequenz des Signals moduliert, wobei eine durch eines der Datenelemente modulierte Trägerfrequenz Träger genannt wird,

das mindestens eine Präambel (21) enthält, die von mindestens drei aufeinanderfolgenden Symbolen geformt wird, wobei die Präambelsymbole mindestens zwei Endsymbole ($21_1$, $21_3$) enthalten, die mindestens ein zentrales Symbol ($21_2$) umrahmen, das aus Pilotdaten besteht, zentrale Pilotdaten (23) genannt,

derart, dass die Endsymbole auf mindestens bestimmten ihrer Träger, die einem Pilotdatenwert benachbart sind, Datenelemente tragen, die in mindestens einer Gruppe von Elementen organisiert sind, wobei die Werte zwischen jedem Element einer Gruppe von Elementen durch eine Proportionalitätsbeziehung verbunden sind, die es ermöglicht, beim Empfang eine Interferenz zu annullieren oder zu verringern, die den zentralen Pilotdatenwert (23) betrifft, **dadurch gekennzeichnet, dass** die Datenelemente mindestens einer Gruppe von Elementen informative Datenelemente sind,

damit die Präambel (21) es ermöglicht, eine Schätzung eines Übertragungskanals zwischen einem Sender, der dazu bestimmt ist, das Mehrträgersignal zu senden, und dem Empfänger zu bestimmen.

Fig. 1 (Art antérieur)

Fig. 2A

Fig. 2B

y(t)

31

32

Fig. 3

Fig. 4A

Fig. 4B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0225883 A

- WO 0225884 A